# EUROPEAN PATENT SPECIFICATION

(11) **EP 1 602 209 B1**
(45) Date of publication and mention of the grant of the patent: **02.06.2010**
(21) Application number: 04717170.7
(22) Date of filing: 04.03.2004
(51) Int. Cl.: H04L 29/06, H04W 36/18

(54) **POLICY MANAGEMENT DURING HANDOVER**
VERFAHRENSVERWALTUNG WÄHREND DEM WEITERREICHEN
GESTION DES POLITIQUES PENDANT UN TRANSFERT

(30) Priority: 06.03.2003 US 452049 P
(43) Date of publication of application: 07.12.2005
(73) Proprietor: Nokia Corporation, 02150 Espoo (FI)
(72) Inventor: ZHENG, Haihong, Coppell, TX 75019 (US)
(74) Representative: TBK-Patent
(86) International application number: PCT/IB2004/000584
(87) International publication number: WO 2004/079492

(56) References cited:
- GOPAL R ET AL: "Policy based access router selections and context transfers in mobile IP network" CONFERENCE ON NETWORK CONTROL AND ENGINEERING FOR QUALITY OF SERVICE, SECURITY AND MOBILITY, XX, XX, 23 October 2002 (2002-10-23), pages 3-14, XP002966424
- Q. LIU ET AL: "Diameter User Session Mobility Application" AAA WORKING GROUP. INTERNET DRAFT ., February 2003 (2003-02), pages 1-17, XP015004224
- R. KOODLI ET AL: "A Context transfer Protocol for seamless Mobility" SEAMOBY WORKING GROUP. INTERNET DRAFT, 30 August 2002 (2002-08-30), pages I-34, XP015004020

## Description

### BACKGROUND OF THE INVENTION

### Field of the invention

This invention relates to a method and a system for policy management, in particular for policy management during handover.

### Description of the prior art

The invention relates to the policy session management. A policy control framework has been defined in Request for Comments (RFC) 2753, for example.

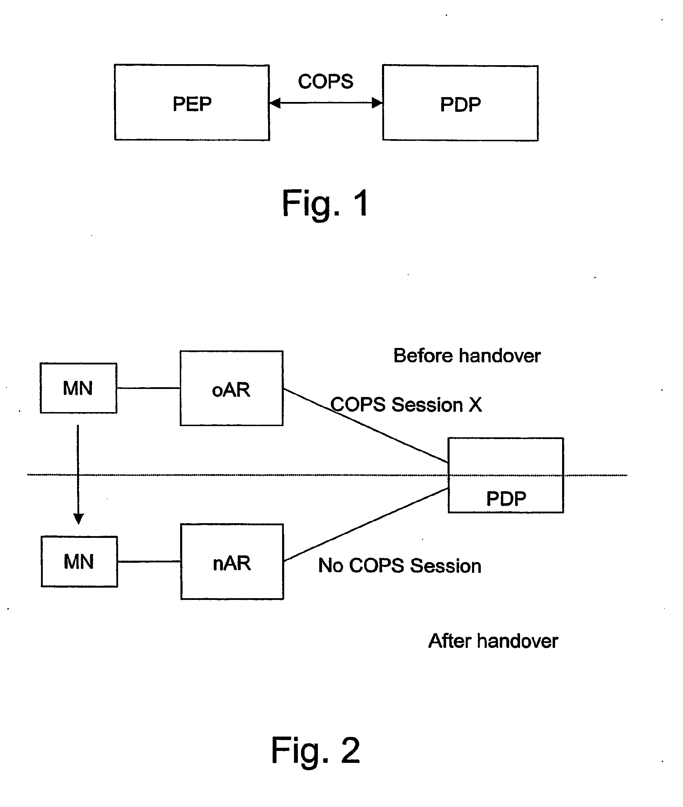

Policy is a combination of rules and services where rules define the criteria for resource access and usage. Policy is required for certain services in order to define which services are supported and how they are supported. Fig. 1 illustrates the layout of the basic policy components. A Policy Decision Point (PDP), named as Policy Server (PS) as well, is the point where policy decisions are made, while a Policy Enforcement Point (PEP) is the point where policy decisions are actually enforced. That is, the PEP actually grants or denies the request for the user.

A user entity, e.g., a host, is connected to the PEP. Thus, in an IP (Internet Protocol) network, the PEP may be located in an Access Router (AR), for example.

A simple query and response protocol is adopted widely in the internet to support the communication between PDP and PEP. This protocol is Common Open Policy Service (COPS) protocol defined in RFC 2748 and RFC 3084. As its transport protocol, COPS uses TCP (Transmission Control Protocol). The COPS protocol employs a client-server model where the PEP sends requests, updates and deletes to the PDP and the PDP returns decisions back to the PEP. The PDP may also send unsolicited policy decisions to the PEP to force changes in previously approved request state.

In the following, some terms used in the present description are defined. For further detailed explanations thereof, it is also referred to the above-referenced documents.

A so-called Client-type is used to distinguish between different kinds of clients (e.g., different kind of policy sessions). The Client-type is identified in each message. Different types of clients may have different client specific data and may require different kinds of policy decisions. For example, each new Client-type may have a corresponding usage draft specifying the specifics of its interaction with the particular policy control.

The so-called context of each request corresponds to the type of event that triggered it. For example, the COPS Context object identifies the type of request and message (if applicable) that triggered a policy event via its message type and request type fields.

A so-called client handle is used to identify a unique request state for a single PEP per Client-type. Client handles are chosen by the PEP and are opaque to the PDP. The PDP uses the request handle, i.e., the client handle, to uniquely identify the request state for a particular Client-type over a particular TCP connection and generically ties its decisions to a corresponding request. Client handles are initiated in request messages and are then used by subsequent request, decision, and report messages to reference the same request state. When the PEP is ready to remove a local request state, it will issue a delete message for the PDP for the corresponding client handle.

The basic interaction between the components begins with the PEP. The PEP will receive a notification or a message that requires a policy decision. Given such an event, the PEP then formulates a request for a policy decision and sends it to the PDP. The request for policy control from a PEP to the PDP may contain one or more policy elements (encapsulated into one or more policy objects) in addition to the admission control information (such as a flowspec or amount of bandwidth requested) in the original message or event that triggered the policy decision request. The PDP returns the policy decision and the PEP then enforces the policy decision by appropriately accepting or denying the request. The PDP might optionally contact other external servers, e.g., for accessing configuration, user authentication, accounting and billing databases, depending on which information is needed for the policy decision.

The steps of a policy control procedure are summarized in the following.

First, the PEP is responsible for initiating a persistent TCP connection to a PDP. The PEP uses this TCP connection to request for decisions, to receive decisions and to report processing.

Second, after the connection is established between PEP and PDP, the PDP sends one or more Client-Open messages to PDP, one for each Client-type supported by PEP. The PDP responds with Client-Accept for supported Client-type, or Client-Close specifying the Client-type is not supported.

Third, when a PEP first initiates a request to a PDP, it first establishes a request state client handle for which the PDP maintains the state. The PDP then uses this handle to refer to the exchanged information and decisions communicated over the TCP connection to the PEP for a given Client-type. Once a stateful handle is established for a new request, any subsequent modification of the request can be made using the request message specifying the previously install handle.

It can be seen that a re-establishment of a COPS session may require 1) the third step only if a TCP connection is established between PEP and PDP and Client-type of the request is supported by PEP and PDP, or 2) both the third and second steps if only TCP connection is established, or 3) all the three steps if no TCP connection is established between the PEP and the PDP (e.g., after a loss of connection).

Thus, as described above, in a COPS based policy framework, a PEP is responsible for initiating a persistent TCP connection to a PDP. The PEP uses this TCP connection to request for decisions, to receive decisions and to report processing. If conditions change such that the PDP detects those changes are required in the policies currently in effect in the PEP, it then sends the changes in policy to the PEP, and the PEP updates its local configuration appropriately.

However, when mobility is brought into the picture, the current policy model described above generates the following problems as illustrated in Fig. 2. The upper half of Fig. 2 illustrates the situation before a handover, and the lower half of Fig. 2 illustrates the situation after the handover.

Assuming a Mobile Node (MN) is originally attached to an access router (oAR, i.e., old Access Router) which comprises a PEP. A COPS session X has been established between oAR and the PDP. When the MN moves away from the oAR and attaches to a new Access Router (nAR) which comprises another PEP, the user related policy (e.g., user profile policy) and flow related policy are relocated from oAR to nAR through context transfer. Context transfer is a mechanism for establishing sufficient conditions at one or more ARs to fully support the flows (being the fundamental units of IP services) of a mobile node. After completion of a context transfer, an AR will be capable of forwarding the IP packets to and from the mobile node without disruption of the established service. The context transfer is defined in RFC 3374 "Problem Description: Reasons For Performing Context Transfers Between Nodes in an IP Access Network", for example and further described in GOPAL et al: "Policy based access router selections and context transfers in mobile IP networks", Conference on Network Control and Engineering for QoS, Security and Mobility, 23 Oct, 2002 (28. 10. 200) pages 3-14. XP-002966424.

However, even when performing a context transfer as defined above, the PDP is not aware of the mobility. Therefore, whenever it wants to update the MN related policy, it still uses the Client handle assigned by oAR and sends the decision to oAR instead of nAR. The new policy cannot be enforced to the mobile node that is attached to nAR.

Hence, in the architecture as currently defined, a seamless handover with respect to policy is impossible.

### SUMMARY OF THE INVENTION

Thus, the object underlying the present invention resides in solving the above-described problems such that a handover with respect to a policy session is possible.

This object is solved by a method for policy management in a network comprising at least a mobile node, a policy decision entity, a first policy enforcement entity and a second policy enforcement entity, wherein a handover from the first to the second policy enforcement entity is to be performed for the mobile node, said method comprising the steps of
transferring context information related to the mobile node from the first policy enforcement entity to the second policy enforcement entity,
sending a policy session delete request from the first policy enforcement entity to the policy decision entity, and
sending a policy session establishment request from the second policy enforcement entity to the policy decision entity based on information of the context information received from the first policy enforcement entity .

Alternatively, the above object is solved by a method for policy management in a network comprising at least a mobile node, a policy decision entity, a first policy enforcement entity and a second policy enforcement entity, wherein a handover from the first to the second policy enforcement entity is to be performed for the mobile node, said method comprising the steps of
transferring context information related to the mobile node comprising an old policy session identifier from the first policy enforcement entity to the second policy enforcement entity,
deleting the policy session state locally in the first policy enforcement entity, and
sending a policy session update request from the second policy enforcement entity to the policy decision entity with the old policy session identifier received from the first policy enforcement entity.

Alternatively, the object is also solved by a network system for policy management, the network comprising at least a mobile node, a policy decision entity, a first policy enforcement entity and a second policy enforcement entity, wherein
the mobile node comprises means for performing a handover from the first to the second policy enforcement entity,
the first policy enforcement entity comprises means for transferring context information related to the mobile node to the second policy enforcement entity, and means for sending a policy session delete request to the policy decision entity upon a handover of the mobile node from the first to the second policy enforcement entity, and
the second policy enforcement entity comprises means for sending a policy session establishment request to the policy decision entity based on information of the context information received from the first policy enforcement entity.

The above object is also solved by a network system for policy management, the network comprising at least a mobile node, a policy decision entity, a first policy enforcement entity and a second policy enforcement entity, wherein
the mobile node comprises means for performing a handover from the first to the second policy enforcement entity,
the first policy enforcement entity comprises means for transferring context information related to the mobile node comprising the old policy session identifier to the second policy enforcement entity and for deleting the policy session state locally upon a handover of the mobile node from the first to the second policy enforcement entity, and
the second policy enforcement entity comprises means for sending a policy session update request to the policy decision entity with the old policy session identifier received from the first policy enforcement entity.

In particular, according to the invention mechanisms are introduced by which a policy session can be continued even after a handover of a mobile node between different policy enforcement entities. Thus, a seamless handover is achieved.

During sending a policy session establishment request from the second policy enforcement entity to the policy decision entity, also a new policy session identifier may be sent to the policy decision entity.

Thus, in the policy decision entity it may be decided, after receiving the policy session establishment request, whether the policy session is to be established or not, and, in case it is decided that the policy session is to be established, a policy session establishment decision may be sent to the second policy enforcement entity including the new policy session identifier assigned by the second policy enforcement entity.

Before sending a policy session establishment request from the second policy enforcement entity to the policy decision entity, a policy session type may be negotiated between the second policy enforcement entity and the policy decision entity, wherein the sending is only performed in case the policy session type is supported by both entities.

On sending the policy session update request, also an identifier of the first policy enforcement entity and a new session identifier may be sent to the policy decision entity.

After receiving the policy session update request from the second policy enforcement entity, the policy decision entity may send a policy session update decision to the second policy enforcement entity in case the request is accepted.

Furthermore, the old session identifier may be replaced with the new session identifier and the identifier of the first policy enforcement entity may be replaced with the identifier of the second policy enforcement entity after receiving the session update request in the policy decision entity.

The protocol used between the policy decision entity and the policy enforcement entity may be a Common Open Policy Service (COPS) protocol, a Remote Authentication Dial In User Service (RADIUS) protocol, a Diameter protocol or the like.

The policy enforcement entity may be a network node comprising a Policy Enforcement Point (PEP). Furthermore, the policy decision entity may be a network control node comprising a Policy Decision Point (PDP).

The policy session identifier mentioned above may be a client handle. The identifier of the policy enforcement entity may be the address of the policy enforcement entity.

On transferring the context, information regarding the identity of the policy decision entity may be transmitted to the second policy enforcement entity.

### BRIEF DESCRIPTION OF THE DRAWINGS

Fig. 1 illustrates the layout of the basic policy components,
Fig. 2 illustrates a handover according to the prior art,
Fig. 3 illustrates a handover according to a first embodiment of the present invention, and
Fig. 4 illustrates a handover according to a second embodiment of the present invention.

### DESCRIPTION OF THE PREFERRED EMBODIMENTS

In the following, preferred embodiments are described by referring to the enclosed drawings.

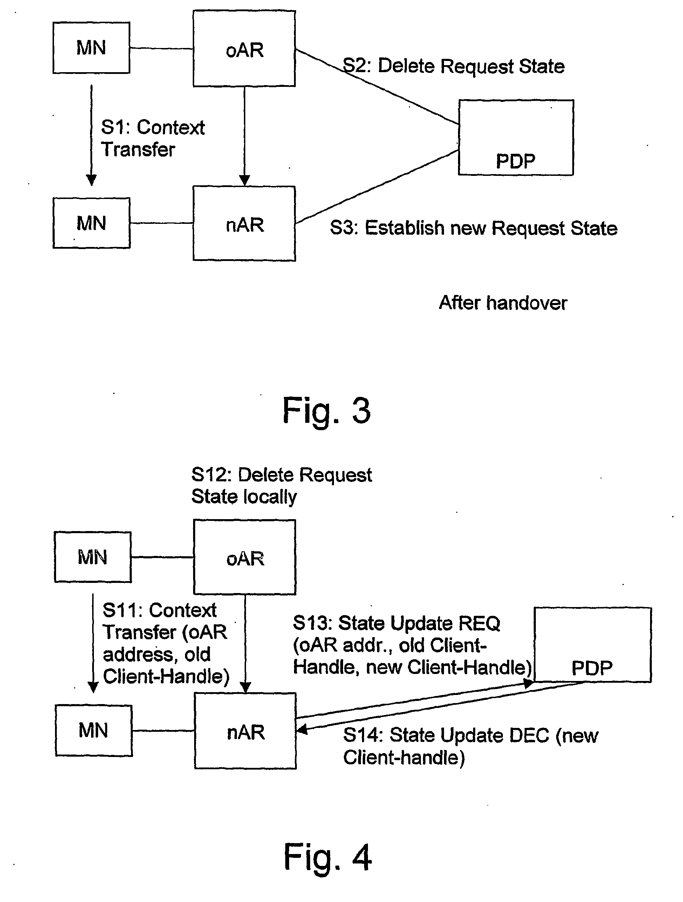

A handover procedure with respect to policy management according to a first embodiment is described in the following by referring to Fig. 3.

Similar to Fig. 2, the upper half of Fig. 3 illustrates the situation before the handover, and the lower half illustrates the situation after the handover.

The embodiment is applicable to a network system which comprises at least one Policy Decision Point (PDP) as an example for a policy decision entity and at least two Access Routers (AR). Moreover, at least one mobile node (MN) is present in the network system. In the following, a handover of this mobile node between the two Access Routers is considered.

Before the handover, the mobile node (MN) is attached to an Access Router, which is termed as an old Access Router (oAR). The Access Router comprises a PEP. Thus, the combination of the oAR and the PEP is an example for a policy enforcement entity. After the handover, the mobile node MN is attached to the new Access Router (nAR), which also comprises a PEP, and is also an example for another policy enforcement entity.

As illustrated, during the handover, the oAR transfers the related context for the mobile node to the nAR (step S1). The oAR deletes the request state by sending a corresponding delete request to the PDP (step S2). After this, the nAR establishes a new request state by sending a corresponding establishment request to the PDP (step S3) .

In the following, the steps S2 and S3 and further steps taken after the context transfer are described in more detail. The following steps are taken in oAR and nAR and shown in the following figure.

In step S1, after transferring the related context for MN to the nAR or explicated request by another network entity, the oAR requests the PDP to remove the state related to the particular Client handle by sending a COPS Delete Request State (DRQ) message.

After receiving the related context for MN from the oAR, the nAR tries to request PDP to set up a new COPS session in step S3. If a TCP connection is not established between the nAR and the PDP, then the nAR should first establish a TCP connection. After the TCP connection is established or if the TCP connection is already available, the nAR checks if the Client Type supported by the nAR is negotiated between nAR and PDP. If it is not, the PEP should send a COPS Client-Open (OPN) message to the PDP, and the PDP should respond with COPS Client-Accept (CAT) or COPS Client-Close (CC) message, depending on whether the request is granted or not. If the Client Type has been negotiated between the nAR and the PDP, the nAR requests the PDP to establish a new COPS session with a new Client handle by sending a COPS Request (REQ) message.

Thus, the session can be continued such that a seamless handover is possible. According to the first embodiment, a simple and straightforward solution to the problem underlying the present invention is provided.

Namely, the approach according to the first embodiment does not require modification to the current COPS protocol, and can be installed in existing systems without further problems. Nevertheless, this approach produces processing and delay overhead in the process inside the PDP. The PDP basically needs to delete the existing policies and regenerate the similar policy state based on the various policy rules and establish a new COPS session with the nAR. If the PDP comprises sufficient resources, this does not pose a problem.

However, in the following a second embodiment is described according to which the additional processing and corresponding delay in the PDP is avoided. The procedure according to the second embodiment is illustrated in Fig. 4. The second embodiment is similar to the first embodiment except for the following.

Similar to step S1 shown in Fig. 3, in step S11, context information are sent from the oAR (as an example for the first policy enforcement entity) to the nAR (as an example for the second policy enforcement entity). The context information comprises at least the old Client handle (as an example for a policy session identifier) used between the oAR and the PDP for identifying the policy session.

After this, in step S12 the oAR deletes the policy session state locally, i.e., it does not send a message to the PDP, in contrast to the first embodiment. In step S13, the nAR, after receiving the context information, sends State Update Request (as an example for a policy session update request) to the PDP (as an example for the policy decision entity) at least with the old Client handle. Namely, the State Update Request (REQ) comprises at least the identity of the oAR and the old Client handle such that the PDP can identify the session which was already established between the oAR and the PDP. In case the PDP accepts the update request, the PDP sends a State Update Decision (DEC) to the nAR comprising a new Client handle in step S14.

Thus, according to the second embodiment, the COPS is enhanced by adding a mobility extension. Namely, the Client handle of the related COPS session between oAR and the PDP (termed as old Client Handle) is included into the context and is transferred to the nAR (step S11). The old Access Router oAR deletes the related states locally (step S12), as mentioned above. When the nAR receives the context with an old Client handle, the nAR then sends a State Update REQ message with the old Client handle from the oAR and also with a new Client handle that will be used to identify the new COPS session between nAR and PDP, and the address of the oAR to the PDP (step S13). Upon receiving such a request, the PDP (or PS, Policy Server) updates its state by replacing the old Client handle with the new Client handle assigned by the nAR as well as the address of the oAR with the address of the nAR. The other states remain the same inside the PDP, and the PDP sends a State Update DEC comprising the new Client handle to the nAR (step S14). For the subsequent interaction with the nAR, the PDP uses the nAR and the new Client handle.

Although an extension needs to be defined for COPS protocol, the processing delay at PDP and thus the overall delay for the handover process are highly reduced.

The above description and accompanying drawings only illustrate the present invention by way of example. Thus, the embodiment may vary within the scope of the attached claims.

For example, the above embodiments can be combined arbitrarily. In this way, the procedure according to the first or to the second embodiment can be chosen, for example depending on the current operation load on the PDP.

Moreover, the procedures according to the embodiments can also be carried out in case more than one PDP is concerned. That is, it might be the case that physically different PDPs support different Client-types. The sessions with the different PDPs can be considered as independent policy sessions. Therefore, the procedures according to the embodiments can be performed independently for each policy session, such that also a handover of a plurality of different policy sessions can be carried out.

Moreover, the Access Router (AR) described in the embodiment is only an example for a policy enforcement entity. Instead, any a network node comprising a policy enforcement function can be used. For example, an Access Point, an Edge Router or other network nodes comprising a PEP may be used.

Furthermore, preferably the new Access Router should be aware of the correct PDP. Thus, preferably the corresponding information (e.g., the address of the correct PDP) can be included in the context transfer contents.

Furthermore, according to the above-described embodiments the COPS protocol is used as the protocol between the Accress Routers (oAR, nAR) and the PEP. However, the invention is not limited thereon, and other suitable protocols may be used. For example, a Remote Authentication Dial In User Service (RADIUS) protocol may be used. RADIUS is an authentication protocol used, e.g., in some radio access networks (like WLAN). RADIUS is described in RFC2865, for example. Further, also a Diameter protocol can be used. Diameter is designed for partly the same purposes (authentication and accounting in some cellular networks). Diameter is described in an Internet Draft "Diameter Base Protocol" <draft-ietf-aaa-diameter-xx>, for example.

## Claims

1. A method for policy management in a network comprising at least a mobile node, a policy decision entity, a first policy enforcement entity and a second policy enforcement entity, wherein a handover from the first to the second policy enforcement entity is to be performed for the mobile node, said method comprising the steps of
transferring context information related to the mobile node from the first policy enforcement entity to the second policy enforcement entity (S1),
sending a policy session delete request from the first policy enforcement entity to the policy decision entity (S2), and
sending a policy session establishment request from the second policy enforcement entity to the policy decision entity based on information of the context information received from the first policy enforcement entity (S3).

2. The method according to claim 1, wherein during the step of sending a policy session establishment request from the second policy enforcement entity to the policy decision entity, also a new policy session identifier is sent to the policy decision entity.

3. The method according to claim 2, further comprising the step of
deciding, in the policy decision entity after receiving the policy session establishment request, whether the policy session is to be established or not, and,
in case it is decided that the policy session is to be established, sending a policy session establishment decision to the second policy enforcement entity including the new policy session identifier assigned by the second policy enforcement entity.

4. The method according to claim 1, wherein before the step of sending a policy session establishment request from the second policy enforcement entity to the policy decision entity, a policy session type is negotiated between the second policy enforcement entity and the policy decision entity, wherein the sending step is only performed in case the policy session type is supported by both entities.

5. A method for policy management in a network comprising at least a mobile node, a policy decision entity, a first policy enforcement entity and a second policy enforcement entity, wherein a handover from the first to the second policy enforcement entity is to be performed for the mobile node, said method comprising the steps of
transferring context information related to the mobile node comprising an old policy session identifier from the first policy enforcement entity to the second policy enforcement entity (S11),
deleting the policy session state locally in the first policy enforcement entity (S12), and
sending a policy session update request from the second policy enforcement entity to the policy decision entity with the old policy session identifier received from the first policy enforcement entity (S13).

6. The method according to claim 5, wherein in the policy session update request sending step, also an identifier of the first policy enforcement entity and a new session identifier is sent to the policy decision entity.

7. The method according to claim 5, wherein, after receiving the policy session update request from the second policy enforcement entity, the policy decision entity sends a policy session update decision to the second policy enforcement entity in case the request is accepted.

8. The method according to claim 6, further comprising the step of,
replacing the old session identifier with the new session identifier and replacing the identifier of the first policy enforcement entity with the identifier of the second policy enforcement entity after receiving the session update request in the policy decision entity.

9. The method according to claim 1 or 5, wherein the protocol used between the policy decision entity and the policy enforcement entity is a Common Open Policy Service (COPS) protocol.

10. The method according to claim 1 or 5, wherein the protocol used between the policy decision entity and the policy enforcement entity is a Remote Authentication Dial In User Service (RADIUS) protocol.

11. The method according to claim 1 or 5, wherein the protocol used between the policy decision entity and the policy enforcement entity is a Diameter protocol.

12. The method according to claim 1 or 5, wherein the policy enforcement entity is a network node comprising a Policy Enforcement Point (PEP).

13. The method according to claim 1 or 5, wherein the policy decision entity is a network control node comprising a Policy Decision Point (PDP).

14. The method according to claim 3 or 5, wherein the policy session identifier is a client handle.

15. The method according to claim 6 or 7, wherein the identifier of the policy enforcement entity is the address of the policy enforcement entity.

16. The method according to claim 1 or 5, wherein in the context transfer step, information regarding the identity of the policy decision entity is transmitted to the second policy enforcement entity.

17. A network system for policy management, the network comprising at least a mobile node, a policy decision entity, a first policy enforcement entity and a second policy enforcement entity, wherein
the mobile node comprises means for performing a handover from the first to the second policy enforcement entity,
the first policy enforcement entity comprises means for transferring context information related to the mobile node to the second policy enforcement entity, and means for sending a policy session delete request to the policy decision entity upon a handover of the mobile node from the first to the second policy enforcement entity, and
the second policy enforcement entity comprises means for sending a policy session establishment request to the policy decision entity based on information of the context information received from the first policy enforcement entity.

18. The network system according to claim 17, wherein the second policy enforcement entity is adapted to also send a new policy session identifier to the policy decision entity.

19. The network system according to claim 18, wherein the policy decision entity comprises means for deciding, after receiving the policy session establishment request, whether the policy session is to be established or not, and for sending a policy session establishment decision to the second policy enforcement entity including the new policy session identifier assigned by the second policy enforcement entity, in case it is decided that the policy session is to be established.

20. The network system according to claim 17, wherein the second policy enforcement entity and the policy decision entity are adapted to negotiate a policy session type, before sending a policy session establishment request from the second policy enforcement entity to the policy decision entity, wherein the second policy enforcement entity is adapted to send the policy session establishment request only in case the policy session type is supported by both entities.

21. A network system for policy management, the network comprising at least a mobile node, a policy decision entity, a first policy enforcement entity and a second policy enforcement entity, wherein
the mobile node comprises means for performing a handover from the first to the second policy enforcement entity,
the first policy enforcement entity comprises means for transferring context information related to the mobile node comprising the old policy session identifier to the second policy enforcement entity and for deleting the policy session state locally upon a handover of the mobile node from the first to the second policy enforcement entity, and
the second policy enforcement entity comprises means for sending a policy session update request to the policy decision entity with the old policy session identifier received from the first policy enforcement entity.

22. The network system according to claim 21, wherein the second policy enforcement entity is adapted to assign a new session identifier to the policy session and send the policy session update request with an identifier of the first policy enforcement entity and the new session identifier to the policy decision entity.

23. The network system according to claim 21, wherein the policy decision entity is adapted to send a policy session update decision to the second policy enforcement entity in case the request is accepted, after receiving the policy session update request from the second policy enforcement entity.

24. The network system according to claim 22, wherein the policy decision entity is adapted to replace the old session identifier with the new session identifier and to replace the identifier of the first policy enforcement entity with the identifier of the second policy enforcement entity after receiving the session update request.

25. The network system according to claim 17 or 21, wherein the protocol used between the policy decision entity and the policy enforcement entity is a Common Open Policy Service (COPS) protocol.

26. The network system according to claim 17 or 21, wherein the protocol used between the policy decision entity and the policy enforcement entity is a Remote Authentication Dial In User Service (RADIUS) protocol.

27. The network system according to claim 17 or 21, wherein the protocol used between the policy decision entity and the policy enforcement entity is a Diameter protocol.

28. The network system according to claim 17 or 21, wherein the policy enforcement entity is a network node comprising a Policy Enforcement Point (PEP).

29. The network system according to claim 17 or 21, wherein the policy decision entity is a network control node comprising a Policy Decision Point (PDP).

30. The network system according to claim 18 or 19, wherein the policy session identifier is a client handle.

31. The network system according to claim 22 or 23, wherein the identifier of the policy enforcement entity is the address of the policy enforcement entity.

32. The method according to claim 17 or 21, wherein the first policy enforcement entity is adapted to send information regarding the identity of the policy decision entity to the second policy enforcement entity during the context transfer.

## Patentansprüche

1. Verfahren für eine Systemrichtlinienverwaltung in einem Netzwerk mit zumindest einem mobilen Knoten, einer Systemrichtlinienentscheidungseinheit, einer ersten Systemrichtlinienvollzugseinheit und einer zweiten Systemrichtlinienvollzugseinheit, wobei für den mobilen Knoten ein Handover von der ersten zu der zweiten Systemrichtlinienvollzugseinheit durchzuführen ist, und wobei das Verfahren die Schritte aufweist:
Übertragen einer auf den mobilen Knoten bezogenen Kontextinformation von der ersten Systemrichtlinienvollzugseinheit zu der zweiten Systemrichtlinienvollzugseinheit (S1),
Senden einer Systemrichtliniensitzungslöschungsanforderung von der ersten Systemrichtlinienvollzugseinheit an die Systemrichtlinienentscheidungseinheit (S2), und
Senden einer Systemrichtliniensitzungsaufbauanforderung von der zweiten Systemrichtlinienvollzugseinheit an die Systemrichtlinienentscheidungseinheit basierend auf einer Information der von der ersten Systemrichtlinienvollzugseinheit empfangenen Kontextinformation (S3).

2. Verfahren nach Anspruch 1, wobei während des Schritts des Sendens einer Systemrichtliniensitzungsaufbauanforderung von der zweiten Systemrichtlinienvollzugseinheit an die Systemrichtlinienentscheidungseinheit auch ein neuer Systemrichtliniensitzungsidentifizierer an die Systemrichtlinienentscheidungseinheit gesendet wird.

3. Verfahren nach Anspruch 2, ferner mit dem Schritt:
Entscheiden in der Systemrichtlinienentscheidungseinheit, nachdem die Systemrichtliniensitzungsaufbauanforderung empfangen wurde, ob die Systemrichtliniensitzung aufzubauen ist oder nicht, und
in einem Fall, in dem entschieden wird, dass die Systemrichtliniensitzung aufzubauen ist, Senden einer Systemrichtliniensitzungsaufbauentscheidung an die zweite Systemrichtlinienvollzugseinheit, die den neuen Systemrichtliniensitzungsidentifizierer enthält, der durch die zweite Systemrichtlinienvollzugseinheit zugewiesen wurde.

4. Verfahren nach Anspruch 1, wobei vor dem Schritt des Sendens einer Systemrichtliniensitzungsaufbauanforderung von der zweiten Systemrichtlinienvollzugseinheit an die Systemrichtlinienentscheidungseinheit ein Systemrichtliniensitzungstyp zwischen der zweiten Systemrichtlinienvollzugseinheit und der Systemrichtlinienentscheidungseinheit verhandelt wird, wobei der Sendeschritt nur in einem Fall durchgeführt wird, in dem der Systemrichtliniensitzungstyp durch beide Einheiten unterstützt wird.

5. Verfahren für eine Systemrichtlinienverwaltung in einem Netzwerk mit zumindest einem mobilen Knoten, einer Systemrichtlinienentscheidungseinheit, einer ersten Systemrichtlinienvollzugseinheit und einer zweiten Systemrichtlinienvollzugseinheit, wobei für den mobilen Knoten ein Handover von der ersten zu der zweiten Systemrichtlinienvollzugseinheit durchzuführen ist, und wobei das Verfahren die Schritte aufweist:
Übertragen einer auf den mobilen Konten bezogenen Kontextinformation, die einen alten Systemrichtliniensitzungsidentifizierer aufweist, von der ersten Systemrichtlinienvollzugseinheit zu der zweiten Systemrichtlinienvollzugseinheit (S11),
lokales Löschen des Systemrichtliniensitzungszustands in der ersten Systemrichtlinienvollzugseinheit (S12), und
Senden einer Systemrichtliniensitzungsaktualisierungsanforderung von der zweiten Systemrichtlinienvollzugseinheit an die Systemrichtlinienentscheidungseinheit mit dem alten, von der ersten Systemrichtlinienvollzugseinheit empfangenen Systemrichtliniensitzungsidentifizierer (S13).

6. Verfahren nach Anspruch 5, wobei in dem Systemrichtliniensitzungsaktualisierungsanforderungssendeschritt auch ein Identifizierer der ersten Systemrichtlinienvollzugseinheit und ein neuer Sitzungsidentifizierer an die Systemrichtlinienentscheidungseinheit gesendet wird.

7. Verfahren nach Anspruch 5, wobei die Systemrichtlinienentscheidungseinheit nach dem Empfangen der Systemrichtliniensitzungsaktualisierungsanforderung von der zweiten Systemrichtlinienvollzugseinheit eine Systemrichtliniensitzungsaktualisierungsentscheidung an die zweite Systemrichtlinienvollzugseinheit in einem Fall sendet, in dem die Anforderung akzeptiert wird.

8. Verfahren nach Anspruch 6, ferner mit dem Schritt:
Ersetzen des alten Sitzungsidentifizierers durch den neuen Sitzungsidentifizierer und Ersetzen des Identifizierers der ersten Systemrichtlinienvollzugseinheit durch den Identifizierer der zweiten Systemrichtlinienvollzugseinheit nach einem Empfangen der Sitzungsaktualisierungsanforderung in der Sitzungsentscheidungseinheit.

9. Verfahren nach Anspruch 1 oder 5, wobei das zwischen der Systemrichtlinienentscheidungseinheit und der Systemrichtlinienvollzugseinheit verwendete Protokoll ein gemeinsame offene Systemrichtliniendienst-(COPS)-Protokoll ist.

10. Verfahren nach Anspruch 1 oder 5, wobei das zwischen der Systemrichtlinienentscheidungseinheit und der Systemrichtlinienvollzugseinheit verwendete Protokoll ein entfernte Authentifizierungseinwahlbenutzerdienst-(RADIUS)-Protokoll ist.

11. Verfahren nach Anspruch 1 oder 5, wobei das zwischen der Systemrichtlinienentscheidungseinheit und der Systemrichtlinienvollzugseinheit verwendete Protokoll ein Durchmesserprotokoll ist.

12. Verfahren nach Anspruch 1 oder 5, wobei die Systemrichtliniendurchsetzungseinheit ein Netzwerkknoten mit einem Systemrichtlinienvollzugspunkt (PEP) ist.

13. Verfahren nach Anspruch 1 oder 5, wobei die Systemrichtlinienentscheidungseinheit ein Netzwerksteuerungsknoten mit einem Systemrichtlinienentscheidungspunkt (PDP) ist.

14. Verfahren nach Anspruch 3 oder 5, wobei der Systemrichtliniensitzungsidentifizierer ein Client Handle ist.

15. Verfahren nach Anspruch 6 oder 7, wobei der Identifizierer der Systemrichtlinienvollzugseinheit die Adresse der Systemrichtlinienvollzugseinheit ist.

16. Verfahren nach Anspruch 1 oder 5, wobei in dem Kontextübertragungsschritt eine Information bezüglich der Identität der Systemrichtlinienentscheidungseinheit an die zweite Systemrichtlinienvollzugseinheit übertragen wird.

17. Netzwerksystem für eine Systemrichtlinienverwaltung, wobei das Netzwerk zumindest einen mobilen Knoten, eine Systemrichtlinienentscheidungseinheit, eine erste Systemrichtlinienvollzugseinheit und eine zweite Systemrichtlinienvollzugseinheit aufweist, wobei der mobile Knoten eine Einrichtung zum Durchführen eines Handovers von der ersten an die zweite Systemrichtlinienvollzugseinheit aufweist,
die erste Systemrichtlinienvollzugseinheit eine Einrichtung zum Übertragen einer auf den mobilen Konten bezogenen Kontextinformation an die zweite Systemrichtlinienvollzugseinheit und eine Einrichtung zum Senden einer Systemrichtliniensitzungslöschungsanforderung an die Systemrichtlinienentscheidungseinheit bei einem Handover des mobilen Knotens von der ersten an die zweite Systemrichtlinienvollzugseinheit aufweist, und
die zweite Systemrichtlinienvollzugseinheit eine Einrichtung zum Senden einer Systemrichtliniensitzungsaufbauanforderung an die Systemrichtlinienentscheidungseinheit basierend auf einer Information von der von der ersten Systemrichtlinienvollzugseinheit empfangenen Kontextinformation aufweist.

18. Netzwerksystem nach Anspruch 17, wobei die zweite Systemrichtlinienvollzugseinheit angepasst ist, auch einen neuen Systemrichtliniensitzungsidentifizierer an die Systemrichtlinienentscheidungseinheit zu senden.

19. Netzwerksystem nach Anspruch 18, wobei die Systemrichtlinienentscheidungseinheit eine Einrichtung aufweist zum Entscheiden, nach einem Empfangen der Systemrichtliniensitzungsaufbauanforderung, ob die Systemrichtliniensitzung aufzubauen ist oder nicht, und zum Senden einer Systemrichtliniensitzungsaufbauentscheidung die den neuen Systemrichtliniensitzungsidentifizierer enthält, der durch die zweite Systemrichtlinienvollzugseinheit zugeordnet ist, an die zweite Systemrichtlinienvollzugseinheit in einem Fall, in dem entschieden wird, dass die Systemrichtliniensitzung aufzubauen ist.

20. Netzwerksystem nach Anspruch 17, wobei die zweite Systemrichtlinienvollzugseinheit und die Systemrichtlinienentscheidungseinheit angepasst sind, einen Systemrichtliniensitzungstyp zu verhandeln, bevor eine Systemrichtliniensitzungsaufbauanforderung von der zweiten Systemrichtlinienvollzugseinheit an die Systemrichtlinienentscheidungseinheit gesendet wird, wobei die zweite Systemrichtlinienvollzugseinheit angepasst ist, die Systemrichtliniensitzungsaufbauanforderung nur in einem Fall zu senden, in dem der Systemrichtliniensitzungstyp durch beide Einheiten unterstützt wird.

21. Netzwerksystem für eine Systemrichtlinienverwaltung, wobei das Netzwerk zumindest einen mobilen Knoten, eine Systemrichtlinienentscheidungseinheit, eine erste Systemrichtlinienvollzugseinheit und eine zweite Systemrichtlinienvollzugseinheit aufweist, wobei
der mobile Knoten eine Einrichtung zum Durchführen eines Handovers von der ersten zu der zweiten Systemrichtlinienvollzugseinheit aufweist,
die erste Systemrichtlinienvollzugseinheit eine Einrichtung zum Übertragen einer auf den mobilen Knoten bezogenen, den alten Systemrichtliniensitzungsidentifizierer aufweisenden Kontextinformation an die zweite Systemrichtlinienvollzugseinheit und zum lokalen Löschen des Systemrichtliniensitzungszustands bei einem Handover des mobilen Knotens von der ersten zu der zweiten Systemrichtlinienvollzugseinheit aufweist, und
die zweite Systemrichtlinienvollzugseinheit eine Einrichtung zum Senden einer Systemrichtliniensitzungsaktualisierungsanforderung mit dem alten von der ersten Systemrichtlinienvollzugseinheit empfangenen Systemrichtliniensitzungsidentifizierer an die Systemrichtlinienentscheidungseinheit aufweist.

22. Netzwerksystem nach Anspruch 21, wobei die zweite Systemrichtlinienvollzugseinheit angepasst ist, einen neuen Sitzungsidentifizierer der Systemrichtliniensitzung zuzuordnen und die Systemrichtliniensitzungsaktualisierungsanforderung mit einem Identifizierer der ersten Systemrichtlinienvollzugseinheit und dem neuen Sitzungsidentifizierer an die Systemrichtlinienentscheidungseinheit zu senden.

23. Netzwerksystem nach Anspruch 21, wobei die Systemrichtlinienentscheidungseinheit angepasst ist, eine Systemrichtliniensitzungsaktualisierungsentscheidung an die zweite Systemrichtlinienvollzugseinheit in einem Fall zu senden, in dem die Anforderung akzeptiert wird, nachdem die Systemrichtliniensitzungsaktualisierungsanforderung von der zweiten Systemrichtlinienvollzugseinheit empfangen wurde.

24. Netzwerksystem nach Anspruch 22, wobei die Systemrichtlinienentscheidungseinheit angepasst ist, den alten Sitzungsidentifizierer durch den neuen Sitzungsidentifizierer zu ersetzen und den Identifizierer der ersten Systemrichtlinienvollzugseinheit durch den Identifizierer der zweiten Systemrichtlinienvollzugseinheit zu ersetzen, nachdem die Sitzungsaktualisierungsanforderung empfangen wurde.

25. Netzwerksystem nach Anspruch 17 oder 21, wobei das zwischen der Systemrichtlinienentscheidungseinheit und der Systemrichtlinienvollzugseinheit verwendete Protokoll ein gemeinsame offene Systemrichtliniendienst-(COPS)-Protokoll ist.

26. Netzwerksystem nach Anspruch 17 oder 21, wobei das zwischen der Systemrichtlinienentscheidungseinheit und der Systemrichtlinienvollzugseinheit verwendete Protokoll ein entfernte Authentifizierungseineinwahlnutzerdienst-(RADIUS)-Protokoll ist.

27. Netzwerksystem nach Anspruch 17 oder 21, wobei das zwischen der Systementscheidungseinheit und der Systemvollzugseinheit verwendete Protokoll ein Durchmesserprotokoll ist.

28. Netzwerksystem nach Anspruch 17 oder 21, wobei die Systemrichtlinienvollzugseinheit ein Netzwerkknoten mit einem Systemrichtlinienvollzugspunkt (PEP) ist.

29. Netzwerksystem nach Anspruch 17 oder 21, wobei die Systemrichtlinienentscheidungseinheit ein Netzwerksteuerungsknoten mit einem Systemrichtlinienentscheidungspunkt (PDP) ist.

30. Netzwerksystem nach Anspruch 18 oder 19, wobei der Systemrichtliniensitzungsidentifizierer ein Client Handle ist.

31. Netzwerksystem nach Anspruch 22 oder 23, wobei der Identifizierer der Systemrichtlinienvollzugseinheit die Adresse der Systemrichtlinienvollzugseinheit ist.

32. Verfahren nach Anspruch 17 oder 21, wobei die erste Systemrichtlinienvollzugseinheit angepasst ist, während der Kontextübertragung eine Information bezüglich der Identität der Systemrichtlinienentscheidungseinheit an die zweite Systemrichtlinienvollzugseinheit zu senden.

## Revendications

1. Procédé pour la gestion de politique dans un réseau comprenant au moins un noeud mobile, une entité de décision de politique, une première entité de mise en application de politique et une seconde entité de mise en application de politique, dans lequel un transfert de la première à la seconde entité de mise en application de politique doit être effectué pour le noeud mobile, ledit procédé comprenant les étapes consistant à
transférer des informations de contexte liées au noeud mobile de la première entité de mise en application de politique à la seconde entité de mise en application de politique (S1),
envoyer une demande de suppression de session de politique de la première entité de mise en application de politique à l'entité de décision de politique (S2), et
envoyer une demande d'établissement de session de politique de la seconde entité de mise en application de politique à l'entité de décision de politique sur la base d'informations des informations de contexte reçues en provenance de la première entité de mise en application de politique (S3).

2. Procédé selon la revendication 1, dans lequel au cours de l'étape consistant à envoyer une demande d'établissement de session de politique de la seconde entité de mise en application de politique à l'entité de décision de politique, un nouvel identifiant de session de politique est également envoyé à l'entité de décision de politique.

3. Procédé selon la revendication 2, comprenant en outre l'étape consistant à
décider, dans l'entité de décision de politique après la réception de la demande d'établissement de session de politique, si la session de politique doit être établie ou non, et,
dans le cas où il est décidé que la session de politique doit être établie, envoyer une décision d'établissement de session de politique à la seconde entité de mise en application de politique comprenant le nouvel identifiant de session de politique assigné par la seconde entité de mise en application de politique.

4. Procédé selon la revendication 1, dans lequel avant l'étape consistant à envoyer une demande d'établissement de session de politique de la seconde entité de mise en application de politique à l'entité de décision de politique, un type de session de politique est négocié entre la seconde entité de mise en application de politique et l'entité de décision de politique, dans lequel l'étape d'envoi n'est effectuée que dans le cas où le type de session de politique est supporté par les deux entités.

5. Procédé pour la gestion de politique dans un réseau comprenant au moins un noeud mobile, une entité de décision de politique, une première entité de mise en application de politique et une seconde entité de mise en application de politique, dans lequel un transfert de la première à la seconde entité de mise en application de politique doit être effectué pour le noeud mobile, ledit procédé comprenant les étapes consistant à
transférer des informations de contexte liées au noeud mobile comprenant un ancien identifiant de session de politique de la première entité de mise en application de politique à la seconde entité de mise en application de politique (S11),
supprimer l'état de session de politique localement dans la première entité de mise en application de politique (S 12), et
envoyer une demande de mise à jour de session de politique de la seconde entité de mise en application de politique à l'entité de décision de politique avec l'ancien identifiant de session de politique reçu en provenance de la première entité de mise en application de politique (S13).

6. Procédé selon la revendication 5, dans lequel à l'étape d'envoi d'une demande de mise à jour de session de politique, un identifiant de la première entité de mise en application de politique et un nouvel identifiant de session sont également envoyés à l'entité de décision de politique.

7. Procédé selon la revendication 5, dans lequel, après la réception de la demande de mise à jour de session de politique en provenance de la seconde entité de mise en application de politique, l'entité de décision de politique envoie une décision de mise à jour de session de politique à la seconde entité de mise en application de politique dans le cas où la demande est acceptée.

8. Procédé selon la revendication 6, comprenant en outre l'étape consistant à :
remplacer l'ancien identifiant de session par le nouvel identifiant de session et remplacer l'identifiant de la première entité de mise en application de politique par l'identifiant de la seconde entité de mise en application de politique après la réception de la demande de mise à jour de session dans l'entité de décision de politique.

9. Procédé selon la revendication 1 ou 5, dans lequel le protocole utilisé entre l'entité de décision de politique et l'entité de mise en application de politique est un protocole COPS (Common Open Policy Service, service commun de politique ouverte).

10. Procédé selon la revendication 1 ou 5, dans lequel le protocole utilisé entre l'entité de décision de politique et l'entité de mise en application de politique est un protocole RADIUS (Remote Authentication Dial In User Service, service d'authentification distante d'utilisateur appelant).

11. Procédé selon la revendication 1 ou 5, dans lequel le protocole utilisé entre l'entité de décision de politique et l'entité de mise en application de politique est un protocole Diameter.

12. Procédé selon la revendication 1 ou 5, dans lequel l'entité de mise en application de politique est un noeud de réseau comprenant un point de mise en application de politique (PEP).

13. Procédé selon la revendication 1 ou 5, dans lequel l'entité de décision de politique est un noeud de contrôle de réseau comprenant un point de décision de politique (PDP).

14. Procédé selon la revendication 3 ou 5, dans lequel l'identifiant de session de politique est un descripteur de client.

15. Procédé selon la revendication 6 ou 7, dans lequel l'identifiant de l'entité de mise en application de politique est l'adresse de l'entité de mise en application de politique.

16. Procédé selon la revendication 1 ou 5, dans lequel à l'étape de transfert de contexte, des informations concernant l'identité de l'entité de décision de politique sont transmises à la seconde entité de mise en application de politique.

17. Système de réseau pour la gestion de politique, le réseau comprenant au moins un noeud mobile, une entité de décision de politique, une première entité de mise en application de politique et une seconde entité de mise en application de politique, dans lequel
le noeud mobile comprend des moyens pour effectuer un transfert de la première à la seconde entité de mise en application de politique,
la première entité de mise en application de politique comprend des moyens pour transférer des informations de contexte liées au noeud mobile à la seconde entité de mise en application de politique, et des moyens pour envoyer une demande de suppression de session de politique à l'entité de décision de politique lors d'un transfert du noeud mobile de la première à la seconde entité de mise en application de politique, et
la seconde entité de mise en application de politique comprend des moyens pour envoyer une demande d'établissement de session de politique à l'entité de décision de politique sur la base d'informations des informations de contexte reçues en provenance de la première entité de mise en application de politique.

18. Système de réseau selon la revendication 17, dans lequel la seconde entité de mise en application de politique est adaptée pour envoyer également un nouvel identifiant de session de politique à l'entité de décision de politique.

19. Système de réseau selon la revendication 18, dans lequel l'entité de décision de politique comprend des moyens pour décider, après la réception de la demande d'établissement de session de politique, si la session de politique doit être établie ou non, et pour envoyer une décision d'établissement de session de politique à la seconde entité de mise en application de politique comprenant le nouvel identifiant de session de politique assigné par la seconde entité de mise en application de politique, dans le cas où il est décidé que la session de politique doit être établie.

20. Système de réseau selon la revendication 17, dans lequel la seconde entité de mise en application de politique et l'entité de décision de politique sont adaptées pour négocier un type de session de politique, avant l'envoi d'une demande d'établissement de session de politique de la seconde entité de mise en application de politique à l'entité de décision de politique, dans lequel la seconde entité de mise en application de politique est adaptée pour envoyer la demande d'établissement de session de politique uniquement dans le cas où le type de session de politique est supporté par les deux entités.

21. Système de réseau pour la gestion de politique, le réseau comprenant au moins un noeud mobile, une entité de décision de politique, une première entité de mise en application de politique et une seconde entité de mise en application de politique, dans lequel
le noeud mobile comprend des moyens pour effectuer un transfert de la première à la seconde entité de mise en application de politique,
la première entité de mise en application de politique comprend des moyens pour transférer des informations de contexte liées au noeud mobile comprenant l'ancien identifiant de session de politique à la seconde entité de mise en application de politique et pour supprimer l'état de session de politique localement lors d'un transfert du noeud mobile de la première à la seconde entité de mise en application de politique, et
la seconde entité de mise en application de politique comprend des moyens pour envoyer une demande de mise à jour de session de politique à l'entité de décision de politique avec l'ancien identifiant de session de politique reçu en provenance de la première entité de mise en application de politique.

22. Système de réseau selon la revendication 21, dans lequel la seconde entité de mise en application de politique est adaptée pour assigner un nouvel identifiant de session à la session de politique et envoyer la demande de mise à jour de session de politique avec un identifiant de la première entité de mise en application de politique et le nouvel identifiant de session à l'entité de décision de politique.

23. Système de réseau selon la revendication 21, dans lequel l'entité de décision de politique est adaptée pour envoyer une décision de mise à jour de session de politique à la seconde entité de mise en application de politique dans le cas où la demande est acceptée, après la réception de la demande de mise à jour de session de politique en provenance de la seconde entité de mise en application de politique.

24. Système de réseau selon la revendication 22, dans lequel l'entité de décision de politique est adaptée pour remplacer l'ancien identifiant de session par le nouvel identifiant de session et pour remplacer l'identifiant de la première entité de mise en application de politique par l'identifiant de la seconde entité de mise en application de politique après la réception de la demande de mise à jour de session.

25. Système de réseau selon la revendication 17 ou 21, dans lequel le protocole utilisé entre l'entité de décision de politique et l'entité de mise en application de politique est un protocole COPS (Common Open Policy Service, service commun de politique ouverte).

26. Système de réseau selon la revendication 17 ou 21, dans lequel le protocole utilisé entre l'entité de décision de politique et l'entité de mise en application de politique est un protocole RADIUS (Remote Authentication Dial In User Service, service d'authentification distante d'utilisateur appelant).

27. Système de réseau selon la revendication 17 ou 21, dans lequel le protocole utilisé entre l'entité de décision de politique et l'entité de mise en application de politique est un protocole Diameter.

28. Système de réseau selon la revendication 17 ou 21, dans lequel l'entité de mise en application de politique est un noeud de réseau comprenant un point de mise en application de politique (PEP).

29. Système de réseau selon la revendication 17 ou 21, dans lequel l'entité de décision de politique est un noeud de contrôle de réseau comprenant un point de décision de politique (PDP).

30. Système de réseau selon la revendication 18 ou 19, dans lequel l'identifiant de session de politique est un descripteur de client.

31. Système de réseau selon la revendication 22 ou 23, dans lequel l'identifiant de l'entité de mise en application de politique est l'adresse de l'entité de mise en application de politique.

32. Procédé selon la revendication 17 ou 21, dans lequel la première entité de mise en application de politique est adaptée pour envoyer des informations concernant l'identité de l'entité de décision de politique à la seconde entité de mise en application de politique au cours du transfert de contexte.
